Europäisches Patentamt

European Patent Office

Office européen des brevets

(11) Veröffentlichungsnummer: **0 329 001**

**A1**

## (12) EUROPÄISCHE PATENTANMELDUNG

(21) Anmeldenummer: 89102107.3

(51) Int. Cl.⁴: **B65G 11/08**

(22) Anmeldetag: 08.02.89

(30) Priorität: 13.02.88 DE 3804578

(43) Veröffentlichungstag der Anmeldung:
23.08.89 Patentblatt 89/34

(84) Benannte Vertragsstaaten:
AT BE CH DE ES FR GB IT LI NL SE

(71) Anmelder: GEDA-Dechentreiter
Maschinenbau GmbH
Mertinger Strasse 60
D-8854 Asbach-Bäumenheim(DE)

(72) Erfinder: Dechentreiter, Georg
Mertinger Strasse 60
D-8854 Asbach-Bäumenheim(DE)
Erfinder: Graf, Ulrich
Am Keibach 30
D-8850 Donauwörth(DE)

(74) Vertreter: Liebau, Gerhard, Dipl.-Ing.
Birkenstrasse 39
D-8900 Augsburg 22(DE)

(54) Vorrichtung zum Beseitigen von Schutt und dgl. Schüttgut.

(57) Die Vorrichtung zum Beseitigen von Schutt und dgl. Schüttgut besteht aus einzelnen, über flexible Zugmittel (3) miteinander lösbar verbundenen, im wesentlichen konischen, aus Kunststoff gebildeten Schüttrohren (1), von denen jeweils das untere, den kleineren Umfang aufweisende Endteil (1b) eines Schüttrohres in das obere, den größeren Umfang aufweisende Endteil (1a) des darunter befindlichen Schüttrohres reicht. Jedes Schüttrohr (1) besteht aus zwei gleichen Halbschalen, die an ihren in Richtung ihrer Mantellinien verlaufenden Längsrändern fest miteinander verbunden sind.

FIG. 1

Xerox Copy Centre

## Vorrichtung zum Beseitigen von Schutt und dgl. Schüttgut.

Die Erfindung betrifft eine Vorrichtung zum Beseitigen von Schutt und dgl. Schüttgut, bestehend aus einzelnen, über flexible Zugmittel miteinander lösbar verbundenen, im wesentlichen konischen, aus Kunststoff gebildeten Schüttrohren, von denen jeweils das untere, den kleineren Umfang aufweisende Endteil des Schüttrohres in das obere, den größeren Umfang aufweisende Endteil des darunter befindlichen Schüttrohres reicht.

Derartige Vorrichtungen sind in verschiedenen Ausführungen bekannt, so z.B. aus dem DE-GM 84 08 466. Die einzelnen Schüttrohre, die zusammengehängt die Vorrichtung bilden, weisen in der Regel eine axiale Länge von 110 cm, einen oberen Innendurchmesser von 50 cm und einen unteren Innendurchmesser von 40 cm auf. Die einzelnen Schüttrohre werden durch Spritzgießen oder Blasen hergestellt. Die preisgünstigere · Herstellung des Spritzgießens hat jedoch Nachteile, bedingt durch die Form des langen konischen Schüttrohres. Es können nämlich nur spritzbare Kunststoffe entsprechend einem günstigen Längen-Dickenverhältnis verwendet werden. Zähere Kunststoffmaterialien können nur bei entsprechend dickerer Rohrwandung verarbeitet werden, wodurch der Kunststoffverbrauch vergrößert und damit auch der Preis erhöht wird. Ein weiterer Nachteil besteht darin, daß der 110 cm lange Hohlkörper eine entsprechend große Spritzmaschine mit langen wegen für das Schließen und Öffnen des Spritzwerkzeuges benötigt.

Der Erfindung liegt deshalb die Aufgabe zugrunde, eine Vorrichtung zum Beseitigen von Schutt und dgl. Schüttgut der eingangs erwähnten Art zu schaffen, deren Schüttrohre preisgünstig auch auf kleineren Spritzmaschinen herstellbar sind, wobei auch zähere Kunststoffmaterialien bei geringer Wanddicke verarbeitbar sind.

Dies wird nach der Erfindung dadurch erreicht, daß jedes Schüttrohr aus zwei identischen Halbschalen besteht, die an ihren in Richtung ihrer Mantellinien verlaufenden Längsrändern zusammengefügt und fest miteinander verbunden sind.

Derartige Halbschalen können auch mit kleineren Spritzmaschinen mit weitaus geringeren Öffnungs- und Schließwegen hergestellt werden. Das Spritzwerkzeug zur Herstellung der Halbschalen muß nicht längs sondern es kann quer in die Spritzmaschine eingesetzt werden. Darüber hinaus ist es möglich, auch zähere Kunststoffmaterialien bei geringer Wanddicke zu verarbeiten. Es ergeben sich durch die Verwendung von zwei Halbschalen zur Herstellung jedes Schüttrohres auch Vorteile bezüglich der Befestigung von Aufhängeteilen aus Blech, die für die Anbringung der flexiblen Zugmittel erforderlich sind. Nach dem Spritzgießen der Halbschalen werden jeweils zwei Halbschalen zu einem Schüttrohr zusammengefügt und an ihren Längsrändern fest miteinander verbunden. Dies kann durch Verkleben, Verschweißen oder auch mechanisch, vorzugsweise mittels je einer Profilleiste, erfolgen. Die Möglichkeit, auch zähe Kunststoffmaterialien mit verhältnismäßig dünnen Banddicken verarbeiten zu können, hat außer einer größeren Haltbarkeit der Schüttrohre auch den Vorteil, daß diese ein geringeres Gewicht aufweisen und daß zu ihrer Herstellung weniger Kunststoffmaterial erforderlich ist. Da das Schüttrohr aus zwei identischen Halbschalen besteht, ist nur ein Spritzwerkzeug zur Herstellung beider Halbschalen erforderlich.

Weitere vorteilhafte Ausgestaltungen der Erfindung sind in den Unteransprüchen gekennzeichnet.

Die Erfindung ist in folgendem, anhand von in der Zeichnung dargestellten Ausführungsbeispielen näher erläutert.

Es zeigen:

Figur 1 eine Seitenansicht eines Schüttrohres,

Figur 2 einen Radialschnitt nach der Linie II-II der Figur 1,

Figur· 3 einen Teilschnitt an der Stelle III der Figur 2, etwa in fünffacher Vergrößerung,

Figur 4 einen Teil-Axialschnitt nach der Linie IV-IV der Figur 5 durch das obere Endteil des Schüttrohres,

Figur 5 einen Längsschnitt nach der Linie V-V der Figur 4,

Figur 6 einen Querschnitt nach der Linie VI-VI der Figur 4,

Figur 7 einen Teilschnitt der Verbindungsstelle zwischen zwei Halbschalen in einer zweiten Ausführungsform,

Figur 8 einen Teilschnitt der Verbindungsstelle zwischen zwei Halbschalen in einer dritten Ausführungsform,

Figur 9 die Seitenansicht eines Schüttrohres mit Einfülltrichter,

Figur 10 einen Querschnitt durch eine Halbschale in einer weiteren Ausführungsform.

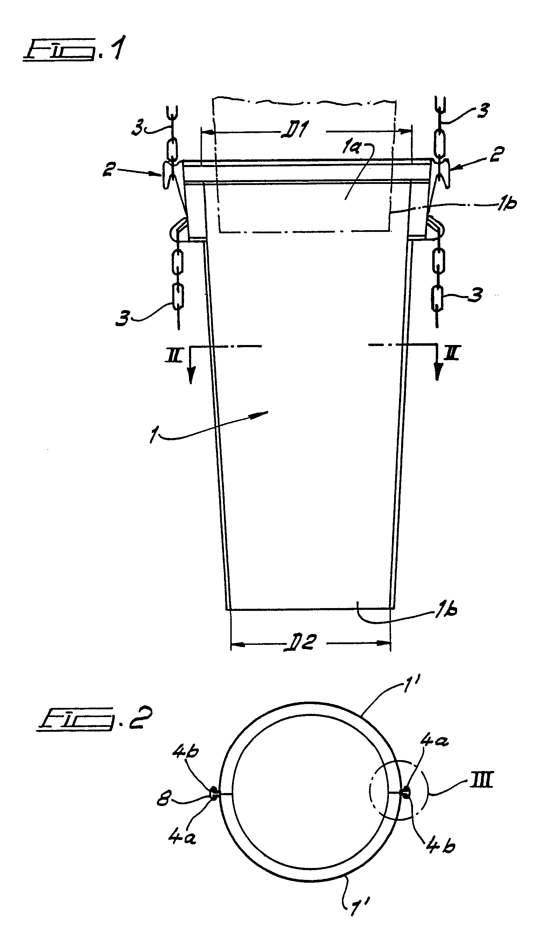

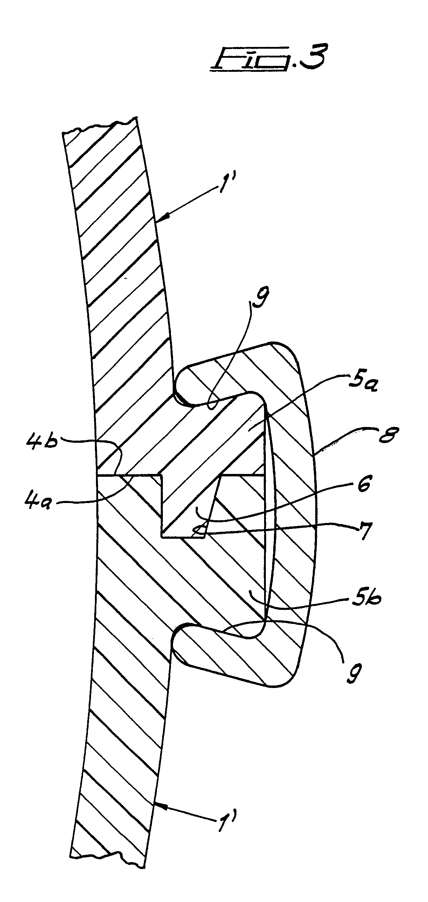

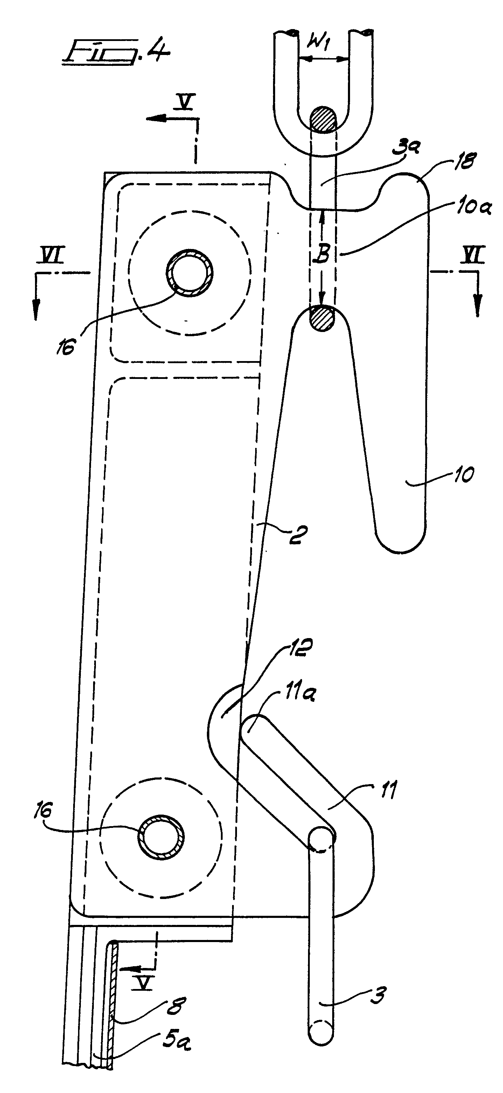

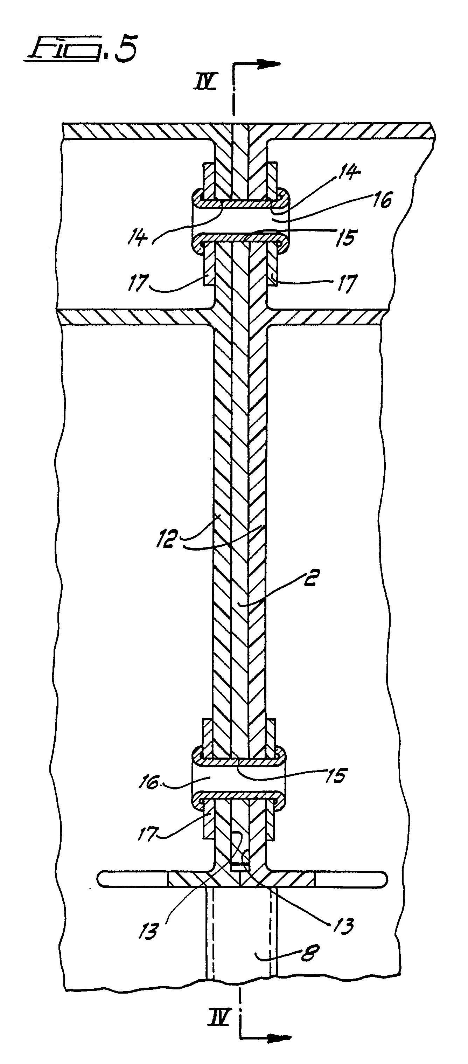

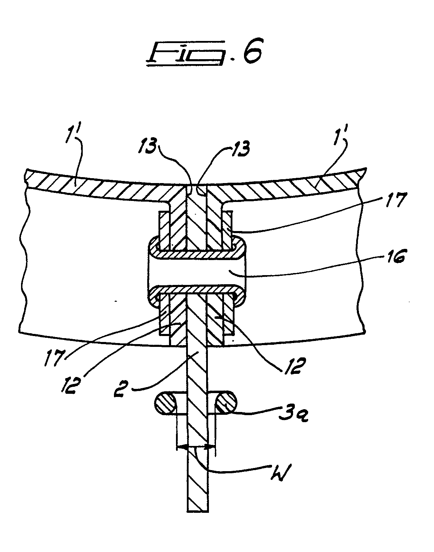

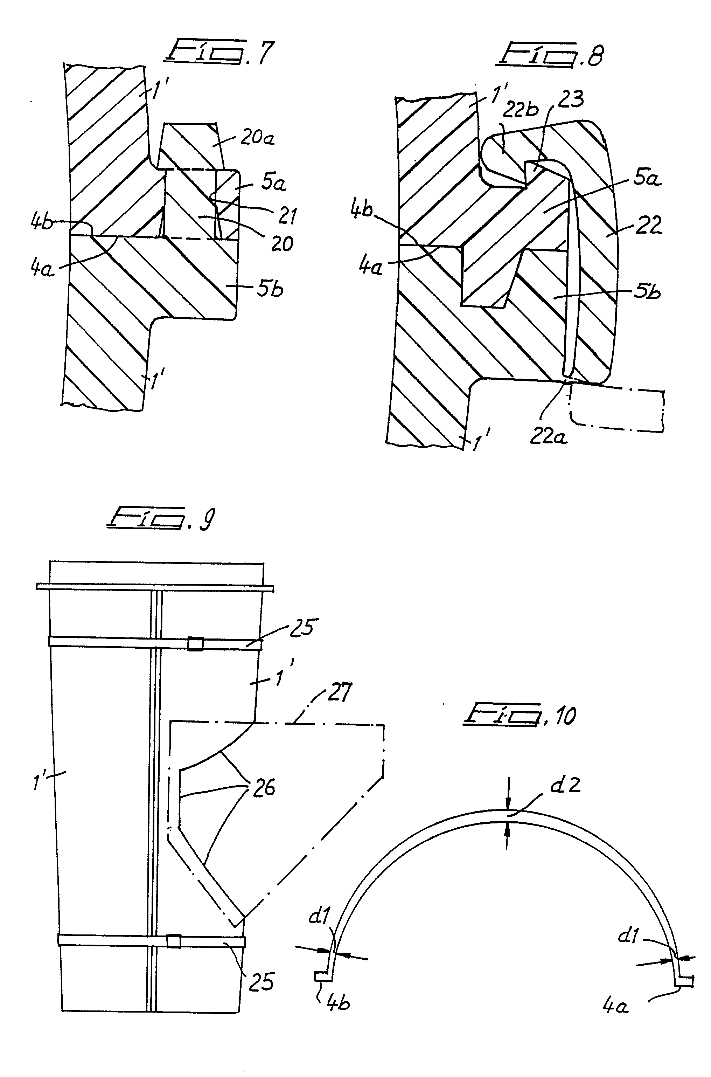

Die gesamte Vorrichtung zum Beseitigen von Schutt und dgl. Schüttgut besteht aus mehreren Schüttrohren 1, von denen eines in Figur 1 in Seitenansicht dargestellt ist. Das Schüttrohr 1 ist im wesentlichen konisch ausgebildet und hat eine axiale Länge von beispielsweise 110 cm, einen oberen Innendurchmesser D1 von ca. 50 cm und einen unteren Innendurchmesser von ca. 40 cm. Am oberen Endteil 1a jedes Schüttrohres sind diametral gegenüberliegend zwei Aufhängeteile 2 befestigt, an denen flexible Zugglieder 3, vorzugsweise in Form von Ketten, angreifen. Anstelle von Ketten können jedoch auch Seile vorgesehen sein. Das untere, den kleineren Umfang aufweisende Endteil 1b eines Schüttrohres reicht jeweils in das obere, den größeren Umfang aufweisende Endteil 1a des darunter befindlichen Schüttrohres hinein. Die flexiblen Zugmittel 3 verbinden die einzelnen Schüttrohre untereinander. Jedes Schüttrohr besteht aus Kunststoff.

Gemäß der Erfindung besteht jedes Schüttrohr 1 aus zwei Halbschalen 1', die vorzugsweise identisch zueinander ausgebildet sind. Die identische Ausgestaltung der beiden Halbschalen 1' hat den Vorteil, daß zu ihrer Herstellung nur ein einziges Werkzeug erforderlich ist. Nach der Herstellung der Halbschalen 1' werden diese an ihren in Richtung der Mantellinien verlaufenden Längsrändern 4a, 4b fest miteinander verbunden. Diese Verbindung kann beispielsweise durch Verschweißen oder Verkleben, vorzugsweise jedoch mechanisch erfolgen, wie es in Figur 3 näher dargestellt ist.

Jede Halbschale 1' weist an jedem ihrer beiden Längsränder 4a, 4b einen nach außen gerichteten Flansch 5a, 5b auf. An den Längsrändern 4a, 4b ist zweckmäßig eine ineinandergreifende Nut-Feder-Verbindung 6, 7 vorgesehen. Jeder Flansch 5a, 5b verbreitert sich radial nach außen im Querschnitt derart, daß die beiden zusammengefügten Flansche 5a, 5b zweier benachbarter Halbschalen 1' ein schwalbenschwanzförmiges Profil bilden. Dieses schwalbenschwanzförmige Profil ist von einer Profilleiste 8 mit einem entsprechend schwalbenschwanzförmigen Innenprofil 9 umfaßt. Die Profilleiste 8, welche vorzugsweise aus stranggepreßtem Aluminium besteht, ist von dem unteren Ende der Halbschalen her auf deren Flansche 5a, 5b aufgeschoben. Die Verwendung eines Flansches hat auch beim Verschweißen bzw. Verkleben gewisse Vorteile, da durch die Flansche die Verbindungsfläche an den Längsrändern 4a, 4b vergrößert wird. Außerdem geben die Flansche der Wandung der Halbschalen 1' im Bereich der Längsränder 4a, 4b eine größere Steifigkeit und damit auch eine bessere Formbeständigkeit, die das Zusammenfügen der beiden Halbschalen zu einem Schüttrohr erleichtert.

Die Verwendung von zwei Halbschalen hat neben den spritztechnischen Vorteilen auch den Vorteil, daß die am oberen Endteil 1a erforderlichen Halteteile 2 sehr einfach und zweckmäßig ausgestaltet sein können und auch in einfacher und dauerhafter Weise mit dem Schüttrohr 1 verbunden werden können. Dies soll nachstehend anhand der Figuren 4 - 6 näher erläutert werden.

Jedes der beiden diametral gegenüberliegend angeordneten Aufhängeteile 2 besteht aus einer ebenen Blechplatte, an welcher durch Stanzen ein oberer Haken 10 und ein unterer Haken 11 gebildet sind. Das Halteteil 2 wird beim Zusammenfügen der beiden Halbschien 1' zwischen jeweils zwei Längsränder 4a, 4b zweier benachbarter Halbschalen eingesetzt. Im Bereich der Halteteile weisen die Halbschalen 1' radial nach außen vorstehende Flansche 12 auf, die etwas breiter sind als die Flansche 5a, 5b. Die Flansche 12 sind im Bereich der Halteteile 2 mit Ausnehmungen 13 versehen, deren Tiefe der halben Blechdicke des Aufhängeteiles 2 entspricht. Die Flansche 12 sind mit Bohrungen 14 und die Aufhängeteile 2 ebenfalls mit Bohrungen 15 versehen, die mit den Bohrungen 14 fluchten. Durch die Bohrungen 14, 15 sind Hohlnieten 16 hindurchgeführt und unter Zwischenfügung von Beilagscheiben 17 vernietet. Anstelle von Hohlnieten können auch gegebenenfalls Schrauben verwendet werden.

Der obere, nach unten offene Haken 10 weist vorteilhaft an seinem oberen Ende radial außen einen nach oben vorstehenden Nocken auf. Über diesen Nocken muß das Kettenglied 3a der Kette bei der Montage hinweggeführt werden. Bei Entlastung der Kette verhindert der Nocken, daß das Kettenglied 3a über den Haken 10 nach unten gleitet und sich ungewollt aushängt.

Der Verbindungssteg 10a, mit welchem der Haken 10 mit dem übrigen Aufhängeteil 2 verbunden ist, weist zweckmäßig eine Breite B auf, die größer ist als die minimale Weite W der einzelnen Kettenglieder. Auf diese Weise wird ein Verdrehen des Kettengliedes 3a gegenüber dem Verbindungssteg 10a verhindert, was ebenfalls dazu beiträgt, ein ungewolltes Aushängen des Kettengliedes 3a bei einem Lockerwerden der Kette zu verhindern.

Während die Kette 3 an dem oberen Haken 10 zur gegenseitigen Verbindung der einzelnen Schüttrohre ein- und aushängbar sein muß, ist es von Vorteil, wenn ein Aushängen der Kette an dem unteren, nach oben offenen Haken 11 grundsätzlich verhindert wird. Zu diesem Zweck erstreckt sich das nach oben gerichtete freie Hakenende 11a des unteren Hakens 11 bis zu den Flanschen 12. Die Kette 3 wird vor der Montage des Aufhängeteils an dem unteren Haken 11 eingehängt. Sobald das Aufhängeteil 2 mittels der Hohlnieten 16 mit den beiden Halbschalen 1' fest verbunden ist, kann sich die Kette 3 am unteren Haken 11 nicht mehr aushängen. Es wird damit sichergestellt, daß immer jeweils zwei Ketten an einem Schüttrohr verbleiben und nicht verloren gehen können.

Anhand der Figuren 7 - 9 sollen auch andere Möglichkeiten zur Verbindung der beiden Halbschalen aufgezeigt werden. Bei dem in Figur 7 dargestellten Ausführungsbeispiel sind an dem Flansch 5b der einen Halbschale 1' mehrere vorstehende Zapfen 20 angespritzt. Jeder dieser Zapfen 20 weist an seinem freien Ende einen im Durchmesser gegenüber dem Zapfendurchmesser verdickten Kopf 20a auf. In dem angrenzenden Flansch 5a der anderen Halbschale 1' sind im Bereich der Zapfen entsprechende Bohrungen 21 vorgesehen. Die Durchmesser der Bohrungen 21 entsprechen den Durchmessern der Zapfen 20. Beim Zusammenfügen zweier Halbschalen 1' werden die Zapfen 21 mit ihrem verdickten Kopf 20a durch die Bohrungen 21 hindurchgedrückt. Sobald der verdickte Kopf 20a durch den Flansch 5a vollständig hindurchgetreten ist, verrastet er an der Außenseite des Flansches, wodurch dann die beiden Halbschalen 1' ohne weitere Verbindungsmittel fest mitein ander verbunden sind. Bei Verwendung der erwähnten Zapfen 20 und der Bohrungen 21 kann eine Nut-Federverbindung entfallen, da in diesem Fall die Zapfen 20 und die Bohrungen 21 auch dazu dienen, die Längsränder 4a und 4b der Haibschalen gegeneinander auszurichten und im ausgerichteten Zustand zu halten. Bei dieser Ausführungsform, bei der weiter unten beschriebenen Ausführungsform gemäß Figur 9 und auch in den Fällen, wo die Längsränder der Halbschalen miteinander verschweißt oder verklebt sind, könnten sich die Flansche auch radial nach innen erstrekken.

Bei dem in Figur 8 dargestellten Ausführungsbeispiel ist an dem einen Flansch 5b der einen Halbschale 1' eine im Querschnitt hakenförmige Verbindungsleiste 22 angespritzt. Diese hakenförmige Verbindungsleiste ist über ein im Querschnitt verjüngtes Teil 22a, ein sogenanntes Filmscharnier, mit diesem Flansch 5b verbunden. Der angrenzende Flansch 5a der anderen Halbschale 1' ist mit einer vorspringenden Verrastungsleiste 23 versehen. An dieser Verrastungsleiste 23 ist der freie Rand 22b der Verbindungsleiste 22 einrastbar, wie es in Figur 8 dargestellt ist. Beim Spritzen der Halbschalen nimmt die Verbindungsleiste 22 die strichpunktiert dargestellte Lage ein. Sobald die Längsränder 4a, 4b der beiden Halbschalen 1' zusammengefügt sind, wird die Verbindungsleiste 22 aus ihrer strichpunktiert dargestellten Lage gemäß Figur 8 nach oben geschwenkt, wobei der freie Rand 22b über die Verrastungsleiste 23 hinweggleitet und hinter dieser Verrastungsleiste einrastet. Auch hier sind keine zusätzlichen Verbindungsmittel zur Verbindung der beiden Halbschalen erforderlich.

Bei dem in Figur 9 dargestellten Ausführungsbeispiel werden die beiden Halbschalen 1' durch mindestens zwei sie umschlingende Bänder 25 zusammengehalten. Bei diesen Bändern kann es sich vorzugsweise um Kunststoffbänder handeln, wie sie üblicherweise zu Verpackungszwecken verwendet werden. Um eine axiale Verschiebung der Bänder 25 zu vermeiden, können die Halbschalen an ihren den Bändern 25 benachbarten Bereichen mit nicht dargestellten Vorsprüngen, wie Rippen oder dgl., versehen sein. Bei dieser Ausführungsform sind die Halbschalen 1' zweckmäßig mit nach innen gerichteten Flanschen versehen. Falls Sie jedoch nach außen gerichtete Flansche aufweisen sollte, so sind die Flansche im Bereich der Bänder mit entsprechenden Ausnehmungen für diese Bänder versehen.

Werden mehrere Schüttrohre aneinandergehängt, damit sich diese über mehrere Stockwerke erstrecken können, dann ist es auch üblich, an einzelnen Stockwerken Schüttrohre mit Einfülltrichtern oder Abzweigrohren vorzusehen. Da die Schüttrohre gemäß der Erfindung aus Halbschalen bestehen, ist es möglich, in einer der Halbschalen 1' in deren Seitenwand eine Ausnehmung 26 bereits beim Spritzen der Halbschale zu erzeugen. Im Bereich dieser Ausnehmung 26 wird dann ein Einfülltrichter 27 oder gegebenenfalls auch ein Abzweigrohr angebracht, welches mit der zugehörigen Halbschale beispielsweise durch Nieten fest verbunden wird.

Bei mehreren zusammengehängten Schüttrohren werden die unteren Schüttrohre mit ihren Achsen gegeneinander leicht geneigt, so daß sie in einem Bogen zu einem unterhalb der Mündung des untersten Schüttrohres aufgestellten Container oder dgl. führen. Durch diese bogenförmige Anordnung der Schüttrohre sind bestimmte Bereiche ihrer Wandung, die um 90° versetzt zu den flexiblen Zugmitteln liegen, einem höheren Verschleiß ausgesetzt. Um diesem höheren Verschleiß Rechnung zu tragen und damit zur Herstellung der Halbschalen möglichst wenig Kunststoff benötigt wird, ist es zweckmäßig, wenn jede Halbschale gemäß Figur 10 in den an ihre Längsränder 4a, 4b angrenzenden Bereichen eine geringere Wanddicke $d_1$ aufweist, als an ihrem gegenüber den Längsrändern 4a, 4b um 90° versetzten mittleren Bereich. So kann beispielsweise die Wanddicke $d_1$ in der Nähe der Längsränder 4a, 4b nur halb so groß sein wie die Wanddicke $d_2$ im mittleren Bereich, wo erfahrungsgemäß der größte Verschleiß eintritt. Die Wanddicke kannkontinuierlich vom mittleren Bereich zu den beiden Längsrändern 4a, 4b hin abnehmen.

**Ansprüche**

1. Vorrichtung zum Beseitigen von Schutt und dgl. Schüttgut, bestehend aus einzelnen, über flexible Zugmittel miteinander lösbar verbundenen, im wesentlichen konischen, aus Kunststoff gebildeten Schüttrohren, von denen jeweils das untere, den kleineren Umfang aufweisende Endteil eines Schüttrohres in das obere, den größeren Umfang aufweisende Endteil des darunter befindlichen Schüttrohres reicht, **dadurch gekennzeichnet,** daß jedes Schüttrohr (1) aus zwei identischen Halbschalen (1') besteht, die an ihren in Richtung ihrer Mantellinien verlaufenden Längsrändern (4a, 4b) zusammengefügt und fest miteinander verbunden sind.

2. Vorrichtung nach Anspruch 1, **dadurch gekennzeichnet,** daß die Halbschalen entlang ihrer Längsränder miteinander verbunden sind.

3. Vorrichtung nach Anspruch 1 oder 2, **dadurch gekennzeichnet,** daß jede Halbschale (1') an jedem ihrer beiden Längsränder (4a, 4b) einen radial nach außen oder nach innen gerichteten Flansch (5a, 5b bzw. 12) aufweist.

4. Vorrichtung nach Anspruch 3, **dadurch gekennzeichnet,** daß an den Längsrändern (4a, 4b) der Halbschalen (1') ineinandergreifende Nut-Feder-Verbindungen (6, 7) vorgesehen sind.

5. Vorrichtung nach mindestens einem der Ansprüche 1 - 4, **dadurch gekennzeichnet,** daß jede Halbschale in den an ihre Längsränder angrenzenden Bereichen eine geringere Wanddicke aufweist als in ihrem gegenüber den Längsrändern um 90° versetzten mittleren Bereich.

6. Vorrichtung nach mindestens einem der Ansprüche 1 - 5, **dadurch gekennzeichnet,** daß die Längsränder (4a, 4b) der beiden Halbschalen (1') miteinander verschweißt oder verklebt sind.

7. Vorrichtung nach Anspruch 3 oder 4, **dadurch gekennzeichnet,** daß sich jeder radial nach außen gerichtete Flansch (5a, 5b) radial nach außen im Querschnitt derart verbreitert, daß die beiden zusammengefügten Flansche (5a, 5b) zweier benachbarter Halbschalen (1') ein schwalbenschwanzförmiges Profil bilden, welches von einer Profilleiste (8) mit einem entsprechenden schwalbenschwanzförmigen Innenprofil (9) umfaßt ist.

8. Vorrichtung nach Anspruch 7, **dadurch gekennzeichnet,** daß die Profilleiste (8) aus Aluminium besteht.

9. Vorrichtung nach mindestens einem der Ansprüche 1 - 5, **dadurch gekennzeichnet,** daß an dem einen Flansch der einen Halbschale mehrere vorstehende Zapfen angespritzt sind, die in entsprechende Bohrungen in dem angrenzenden Flansch der anderen Halbschale eingreifen und mittels eines am freien Ende jedes Zapfens vorgesehenen, im Durchmesser gegenüber dem Zapfendurchmesser verdickten Kopf an dem Flansch der anderen Halbschale verriegelt sind.

10. Vorrichtung nach mindestens einem der Ansprüche 1 - 5, **dadurch gekennzeichnet,** daß an dem einen Flansch der einen Halbschale eine im Querschnitt hakenförmige Verbindungsleiste angespritzt ist und über ein Filmscharnier mit diesem Flansch verbunden ist, und daß der angrenzende Flansch der anderen Halbschale mit einer vorspringenden Verrastungsleiste versehen ist, an welcher der freie Rand der Verbindungsleiste einrastbar ist.

11. Vorrichtung nach mindestens einem der Ansprüche 1 - 5, **dadurch gekennzeichnet,** daß die beiden Halbschalen durch mindestens zwei sie umschlingende Bänder miteinander verbunden sind.

12. Vorrichtung nach mindestens einem der Ansprüche 1 - 5, **dadurch gekennzeichnet,** daß eine der Halbschalen in ihrer Seitenwand eine in der Spritzform erzeugte Ausnehmung für einen seitlichen Einfülltrichter oder ein Abzweigrohr aufweist.

13. Vorrichtung nach Anspruch 3, mit zwei am oberen Endteil des Schüttrohres diametral gegenüberliegend angeordneten, radial nach außen vorstehenden, aus Blech bestehenden Aufhängeteilen, an welchen die flexiblen Zugmittel angreifen, **dadurch gekennzeichnet,** daß die Aufhängeteile (2) ebene Blechplatten sind, die zwischen die Flansche (12) zweier benachbarter Halbschalen (1') eingreifen und mittels mehrerer die beiden benachbarten Flansche (12) und das dazwischen angeordnete Halteteil (2) durchdringender Nieten (16) oder Schrauben mit den Halbschalen (1') verbunden sind.

14. Vorrichtung nach Anspruch 13, **dadurch gekennzeichnet,** daß die Flansche (12) im Bereich der Aufhängeteile (2) Ausnehmungen (13) aufweisen, deren Tiefe der halben Blechdicke des Aufhängeteiles (2) entspricht.

15. Vorrichtung nach Anspruch 13, **dadurch gekennzeichnet,** daß das Aufhängeteil (2) einen durch Stanzen gebildeten oberen, nach unten offenen Haken (10) aufweist, der an seinem oberen Ende radial außen mit einem nach oben vorstehenden Nocken (18) versehen ist.

16. Vorrichtung nach Anspruch 14 oder 15, **dadurch gekennzeichnet,** daß der Verbindungssteg (10a), mit welchem der obere Haken (10) mit dem übrigen Aufhängeteil (2) verbunden ist, breiter ist als die minimale Weite (W) eines am Haken (10) eingehängten, länglichen Kettengliedes (3a).

17. Vorrichtung nach Anspruch 13, **dadurch gekennzeichnet,** daß das Aufhängeteil (2) einen durch Stanzen gebildeten unteren, nach oben offenen Haken (11) aufweist, dessen nach oben gerichtetes freies Hakenende (11a) sich bis zu den Flanschen (12) hin erstreckt.

FIG.1

D1

1a

1b

3

2

2

3

3

II

II

3

1

1b

D2

FIG.2

1'

4b

4a

8

III

4a

4b

1'

Geda-Deckentleiter

Fig.3

Fig.4

Geda-Dechentreiter

FIG.5

FIG.6

FIG.7

FIG.8

FIG.9

FIG.10

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,Y | DE-U-8 408 466  (GEDA)<br>* Insgesamt *<br>--- | 1,2 | B 65 G  11/08 |
| Y | EP-A-0 157 292  (LOBMEIER)<br>* Insgesamt *<br>--- | 1,2 | |
| A | US-A-1 510 288  (MALONE)<br>* Insgesamt *<br>----- | 1-3,12, 13 | |
| | | | **RECHERCHIERTE SACHGEBIETE (Int. Cl.4)**<br><br>B 65 G |

Der vorliegende Recherchenbericht wurde für alle Patentansprüche erstellt

| Recherchenort | Abschlußdatum der Recherche | Prüfer |
|---|---|---|
| DEN HAAG | 19-05-1989 | WERNER D.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

................................................................
& : Mitglied der gleichen Patentfamilie, übereinstimmendes Dokument

EPO FORM 1503 03.82 (P0403)